**Europäisches Patentamt**

**European Patent Office**

**Office européen des brevets**

(11) Veröffentlichungsnummer: **0 237 906 B1**

(12) **EUROPÄISCHE PATENTSCHRIFT**

(45) Veröffentlichungstag der Patentschrift: **21.11.91**

(51) Int. Cl.⁵: **B23B 31/12**, G02B 6/38

(21) Anmeldenummer: **87103364.3**

(22) Anmeldetag: **09.03.87**

(54) **Koaxialspannzange.**

(30) Priorität: **21.03.86 DE 3609723**

(43) Veröffentlichungstag der Anmeldung:
**23.09.87 Patentblatt 87/39**

(45) Bekanntmachung des Hinweises auf die
Patenterteilung:
**21.11.91 Patentblatt 91/47**

(84) Benannte Vertragsstaaten:
**AT CH DE FR GB IT LI SE**

(56) Entgegenhaltungen:
EP-A- 0 134 268          AU-B- 438 287
DE-A- 2 050 119          DE-A- 2 636 997
DE-A- 2 906 716          DE-U- 8 421 648
US-A- 1 812 221          US-A- 4 559 717

(73) Patentinhaber: **SIEMENS AKTIENGESELL-
SCHAFT**
**Wittelsbacherplatz 2**
**W-8000 München 2(DE)**

(72) Erfinder: **Fuchs, Volker, Ing. grad.**
**Röntgenstrasse 34**
**W-8012 Ottobrunn(DE)**

**Beschreibung**

Die Erfindung betrifft eine Koaxialspannzange mit mindestens zwei, vorzugsweise drei, gemeinsam antreibbaren und jeweils über einen zugeordneten Spannhebel in radialer Richtung verstellbaren Spannbacken, wobei jeder Spannhebel über ein erstes Federgelenk mit einem zugeordneten, ortsfesten Basisteil verbunden ist, siehe AU-B-438 287.

Bei der optischen Nachrichtenübertragung über Lichtwellenleiter werden die Lichtleitfasern über mechanische Steckverbinder höchster Präzision derart gekoppelt, daß die beiden signalführenden Faserkerne mit im Submikrometerbereich liegenden Genauigkeitsanforderungen koaxial aufeinandertreffen und damit eine minimale Signaldämpfung aufweisen. Dementsprechend muß bei der Montage einer Lichtleitfaser im Stecker der Kern genauestmöglich koaxial zum Außendurchmesser des Steckerstiftes justiert werden.

Bislang wird bei der Justage der Steckerstift mit seinem Außendurchmesser in einer genauen Buchse oder in einem Prisma gehalten, wobei unbekannte Durchmesserabweichungen bei Verwendung einer Buchse zu undefinierten Verlagerungen und bei Verwendung eines Prismas zu einer gegebenenfalls erfaßbaren translatorischen Verlagerung in Richtung der Prismenspitze führen. Unsicherheiten bei der Durchmesserbestimmung, Rundheitsabweichungen, die meist als Gleichdickformen auftreten und durch die Klemmkraft hervorgerufene hohe lokale Flächenpressungen wirken sich jedoch in jedem Fall als unkontrollierbare Verlagerungen aus.

Bei mechanischen Steckverbindern wird die Position des Steckerstiftes im Falle einer Steckung durch den Hüllzylinder des Steckerstiftes bestimmt. Aus diesem Grunde sollte der Hüllzylinder eines Steckerstiftes auch als Bezug für die Justage der Lichtleitfasern herangezogen werden. Das bedeutet, daß der Steckerstift möglichst großflächig in einer Spanneinheit aufzunehmen ist, wobei die Bewegung der Spannbacken absolut gleichmäßig sein muß, um eine im Submikrometerbereich koaxiale Spannung innerhalb des vorgegebenen Durchmesserbereichs zu gewährleisten. Bewegungen der geforderten Präzision sind jedoch mit herkömmlichen Koaxialspannzangen nicht realisierbar.

Aus dem Dokument EP-A-134 268 ist ein Justier- oder Positioniertisch bekannt, der für Feinverstellungen im Submikrometerbereich geeignet ist und bei welchem ein fester Tischteil, mindestens ein beweglicher Tischteil und dazwischen liegende Federgelenke aus einer gemeinsamen Tischplatte herausgebildet werden.

Das Dokument AU-B-438 287 beschreibt eine Koaxialspannzange, bei der Spannhebel durch Schlitze unter Bildung von Federgelenken aus einem ortsfesten Basisteil herausgebildet sind. Dabei sind drei Spannbacken mittels Schrauben, Langlöchern und Anschlägen radial einstellbar mit den Spannhebeln verbunden.

Der Erfindung liegt die Aufgabe zugrunde, eine Koaxialspannzange zu schaffen, die bei absolut gleichmäßiger Bewegung der Spannbacken eine im Submikrometerbereich koaxiale Spannung von Präzisionsrundteilen und insbesondere von Steckerstiften für lösbare Steckverbindungen von Lichtwellenleitern ermöglicht.

Diese Aufgabe wird bei einer gattungsgemäßen Koaxialspannzange durch die kennzeichnenden Merkmale des Anspruchs 1 gelöst.

Der Erfindung liegt die Erkenntnis zugrunde, daß Bewegungen mit der geforderten Präzision nur über ein Blattfedersystem realisierbar sind, welches aus einem Stück gefertigt wird. Nur auf diese Weise können Einspannungenauigkeiten der Federgelenke vermieden werden und absolut gleiche Eigenschaften einander entsprechender Federgelenke erzielt werden. Dabei sind relativ zu fest angeordneten Basisteilen die Spannhebel in ersten Federgelenken drehbar gelagert, so daß sie bei einer rotatorischen Bewegung des Stellringes über zweite Federgelenke mitgenommen und damit geöffnet oder geschlossen werden. Der Stellring selbst ist über dritte Federgelenke an den Basisteilen rotatorisch beweglich gelagert, so daß ein absolut genauer und verlagerungsfreier Rundlauf des Stellringes gewährleistet ist.

Die Spannbacken sind vorzugsweise mit einer gegenüber der gemeinsamen Platte geringeren Stärke einstückig an die zugeordneten Spannhebel angeformt. Die Einstückigkeit gewährleistet auch hier die erforderliche Präzision. Andererseits können dann die Spannbacken mit ihrer verbleibenden Stärke aus einem fest in die gemeinsame Platte eingebrachten Hartmetalleinsatz herausgebildet sein, so daß durch die Verwendung des Hartmetalls eine hohe Maßgenauigkeit und Verschleißfestigkeit der Spannbacken gewährleistet ist.

Gemäß einer bevorzugten Ausgestaltung der Erfindung sind die Basisteile fest mit einer gemeinsamen und in geringem Abstand angeordneten Grundplatte verschraubt. Die Grundplatte gewährleistet dabei ohne Beeinträchtigung der Funktion der äußerst empfindlichen Koaxialspannzange deren mechanischen Zusammenhalt bei der Handhabung.

Gemäß einer weiteren bevorzugten Ausgestaltung der Erfindung ist vorgesehen, daß die Spannhebel, Basisteile, ersten, zweiten und dritten Federgelenke sowie der Stellring durch Trennschlitze aus der gemeinsamen Platte herausgebildet sind. Derartige Trennschlitze können auf einfache Weise durch Drahterosion mit der erforderlichen Präzision in die gemeinsame Platte eingebracht werden.

Weiterhin ist es besonders günstig, wenn die ersten Federgelenke und auch die zweiten Federgelenke jeweils durch zwei in die gemeinsame Platte eingebrachte Bohrungen gebildet sind. Zwischen den im Bereich von Trennschlitzen angeordneten Bohrungen entstehen dann Einschnürungen, die als elastisch deformierbare Drehgelenke wirken. Von entscheidender Bedeutung ist dabei, daß die Bohrungen mit höchster Präzision in die gemeinsame Platte eingebracht werden können und daß damit die ersten Federgelenke oder auch die zweiten Federgelenke mit einer entsprechend hohen Präzision und Reproduzierbarkeit des Kraft-Weg-Verhaltens realisiert werden können.

Die dritten Federgelenke werden vorzugsweise durch vier paarweise in die gemeinsame Platte eingebrachte Bohrungen gebildet. Die resultierenden Doppelgelenke hoher Präzision haben sich für den Rundlauf des Stellringes als besonders geeignet erwiesen.

Es hat sich auch als günstig herausgestellt, wenn die zweiten Federgelenke und die dritten Federgelenke durch in die gemeinsame Platte eingebrachte Aussparungen jeweils in obere und untere Einzelgelenke aufgeteilt sind. Durch diese Maßnahme wird eine flachere Federkennlinie bei annähernd gleichen Festigkeitseigenschaften der gesamten zweiten und dritten Federgelenke erzielt.

Gemäß einer besonders bevorzugten Ausgestaltung der Erfindung sind die Spannhebel derart gekrümmt ausgebildet, daß die zugeordneten ersten Federgelenke, das Rotationszentrum des Stellringes und die zugeordneten zweiten Federgelenke zumindest annähernd in einer geraden Linie liegen. Durch diese gekrümmte Form der Spannhebel wird die Differenz beider Bogenbewegungen an der Stelle des zweiten Federgelenks ein Minimum. Darüberhinaus wirkt der gekrümmte Spannhebel zusätzlich als ausgleichendes Element.

Für eine einfache Handhabung der Koaxialspannzange ist es besonders günstig, wenn an dem Stellring ein Betätigunghebel angebracht ist, dessen Bewegungsbereich durch seitlich angeordnete Anschläge begrenzt ist. Durch die Anschläge kann dann eine Überbelastung der empfindlichen Federgelenke mit Sicherheit ausgeschlossen werden.

Reproduzierbare Verhältnisse beim Spannen von Präzisionsrundteilen werden auf einfache Weise dadurch sichergestellt, daß die Spannkraft durch eine an dem Betätigungshebel angreifende Feder aufgebracht wird. Eine eventuell vorhandene Vorspannung der Gesamtheit aller ersten, zweiten und dritten Federgelenke kann dann auch auf einfache Weise durch eine an dem Betätigungshebel angreifende Gegenfeder kompensiert werden.

Ein Ausführungsbeispiel der Erfindung ist in der Zeichnung dargestellt und wird im folgenden näher beschrieben.

Es zeigen:

Fig. 1     eine Draufsicht auf eine erfindungsgemäße Präzisions-Koaxialspannzange,

Fig. 2     einen Schnitt durch die gemeinsame Platte der in Fig. 1 dargestellten Präzisions-Koaxialspannzange im Bereich eines zweiten und eines dritten Federgelenks,

Fig. 3     eine teilweise der Fig. 1 entsprechende Darstellung die nur zu Erläuterungszwecken dient,

Fig. 4     die einstückige Verbindung eines ersten Federgelenks mit den benachbarten Koaxialspannzangenteilen,

Fig. 5     die Kontur des ersten Federgelenks nach Fig. 4,

Fig. 6     die einstückige Verbindung eines zweiten und eines dritten Federgelenks mit den benachbarten Koaxialspannzangenteilen und

Fig. 7     die Kontur des zweiten und des dritten Federgelenks nach Fig. 6.

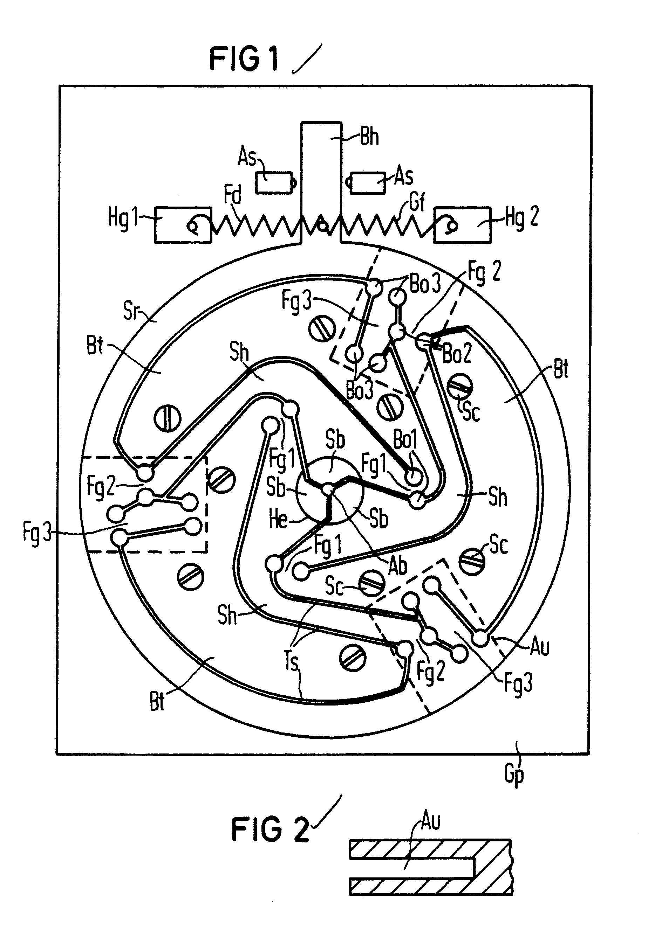

Fig. 1 zeigt eine Draufsicht auf eine als Dreibacken-Spannzange ausgebildete Präzisions-Koaxialspannzange. Dabei sind in eine gemeinsame Platte mehrere Trennschlitze Ts sowie Bohrungen Bo1, Bo2 und Bo3 derart eingebracht, daß aus der Platte insgesamt drei gekrümmte Spannhebel Sh, drei Basisteile Bt, drei erste Federgelenke Fg1, drei zweite Federgelenke Fg2, drei dritte Federgelenke Fg3 sowie ein äußerer Stellring Sr herausgebildet werden. Die Trennschlitze Ts sind dabei mit einer Schlitzbreite von beispielsweise 0,5 mm durch Drahterosion hergestellt worden. Im Zentrumsbereich der Koaxialspannzange ist ein Hartmetalleinsatz He zu erkennen, der in eine ca. 8 mm tiefe Einsenkung der insgesamt 14 mm starken gemeinsamen Platte eingesetzt ist, wobei die einzelnen Segmente dieses Hartmetalleinsatzes He fest mit den darunterliegenden Segmenten der gemeinsamen Platte verbunden sind. Die derart schichtweise aufgebauten Segmente bilden insgesamt drei Spannbacken Sb, wobei die mittlere Aufnahmebohrung für das koaxiale Spannen von Präzisionsrundteilen mit Ab bezeichnet ist.

Jeder Spannhebel Sh ist einerseits in einem ersten Federgelenk Fg1 drehbar gelagert, so daß er bei einer rotatorischen Bewegung des Stellringes Sr über das zugeordnete zweite Federgelenk Fg2 mitgenommen werden kann und ein Öffnen oder Schließen der entsprechenden Spannbacke Sb bewirkt. Diese Funktionsweise eines Spannhebels Sh ist insbesondere aus Fig. 3 ersichtlich, in welcher das erste Federgelenk Fg1 rein schematisch dargestellt ist. Es ist ohne weiteres zu erkennen, daß bei einer Verdrehung des an den ebenfalls schematisch dargestellten dritten Federgelenken Fg3 drehbar gelagerten Stellringes Sr im Uhrzeigersinn die zugeordnete Spannbacke Sb in radialer Richtung geöffnet und bei einer Verdrehung entgegen dem Uhrzeigersinn in radialer Richtung geschlossen wird. Es ist ebenfalls zu erkennen, daß der dargestellte Spannhebel Sh derart gekrümmt ist, daß das erste Federgelenk Fg1, das Rotationszentrum des Stellringes Sr und das zweite Federgelenk Fg2 in einer geraden Linie liegen. Diese Form der Spannhebel Sh bewirkt, daß die Differenz beider Bogenbewegungen an der Stelle des zweiten Federgelenks Fg2 ein Minimum wird.

Gemäß Fig. 1 ist die gesamte Präzisions-Koaxialspannzange auf einer rechteckigen Grundplatte Gp angeordnet, wobei jedes Basisteil Bt jeweils über drei Schrauben Sc fest mit der Grundplatte Gp verschraubt ist. Dabei gewährleisten entsprechende Augen auf der Grundplatte Gp einen geringen Abstand zu der Präzisions-Koaxialspannzange, der mit beispielsweise 1 mm so bemessen ist, das ein Verklemmen von Staubkörnern im Spalt sicher vermieden werden kann.

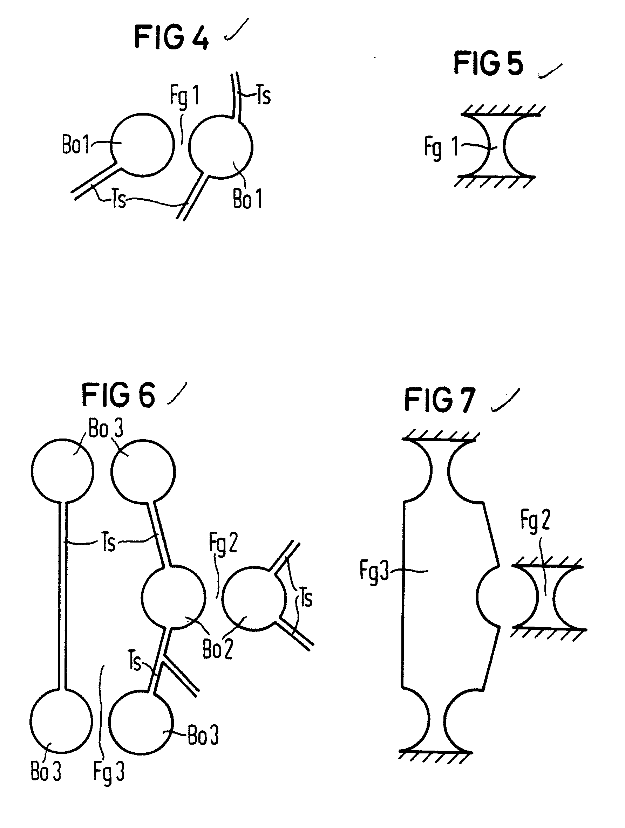

Aus den Fig. 1 und 4 ist ersichtlich, daß die ersten Federgelenke Fg1 durch zwei in die gemeinsame Platte eingebrachte Bohrungen Bo1 gebildet sind, wobei in diese Bohrungen Bo1 die entsprechenden Trennschlitze Ts einmünden. Die Kontur eines derart gebildeten ersten Federgelenks Fg1 ist dann in Fig. 5 schematisch dargestellt.

Aus den Fig. 1 und 6 ist ersichtlich, daß die zweiten Federgelenke Fg2 durch zwei in die gemeinsame Platte eingebrachte Bohrungen Bo2 und daß die dritten Federgelenke Fg3 durch vier paarweise in die gemeinsame Platte eingebrachte Bohrungen Bo3 gebildet sind, wobei auch hier in die Bohrungen Bo2 bzw. Bo3 die entsprechenden Trennschlitze Ts einmünden. Die Konturen der derart gebildeten zweiten und dritten Federgelenke Fg2 und Fg3 sind dann in Fig. 7 schematisch dargestellt.

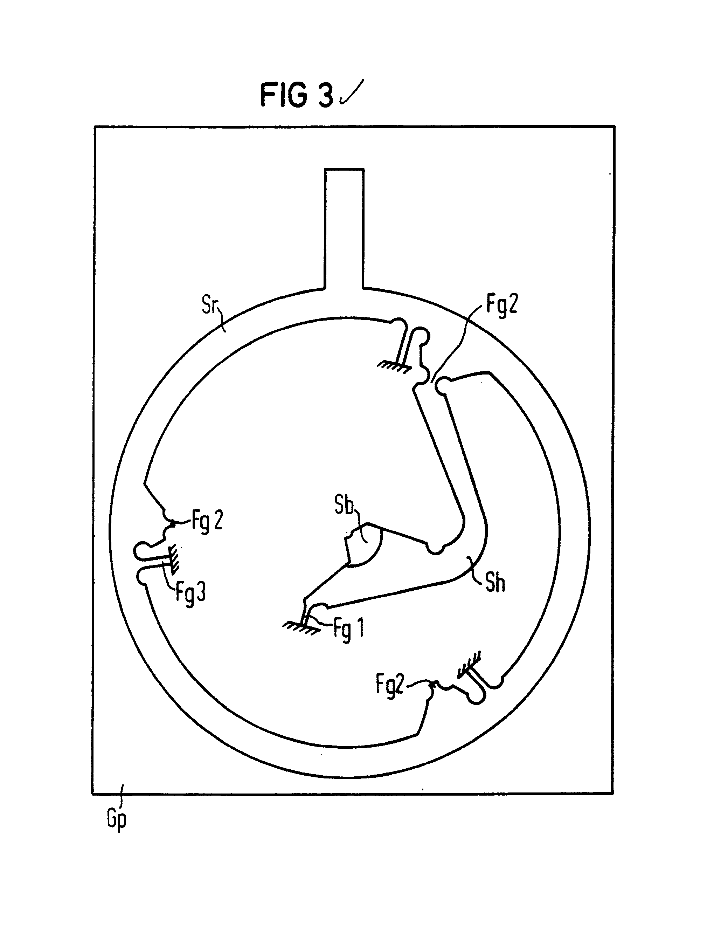

Aus den Fig. 1 und 2 geht hervor, daß die zweiten Federgelenke Fg2 und die dritten Federgelenke Fg3 jeweils durch in die gemeinsame Platte eingebrachte Aussparungen Au in obere und untere Einzelgelenke aufgeteilt sind. Diese Aufteilung der zweiten und dritten Federgelenke Fg2 und Fg3 führt zu flacheren Federkennlinien bei annähernd gleichen Festigkeitseigenschaften der Gesamtgelenke.

Gemäß Fig. 1 ist an den Stellring Sr ein in radialer Richtung nach außen wegstehender Betätigungshebel Bh angeformt, dessen Bewegungsbereich durch zwei seitlich angeordnete Anschläge As begrenzt ist. Die Spannkraft der Präzisions-Koaxialspannzange wird durch eine an dem Betätigungshebel Bh angreifende Feder Fd aufgebracht, deren anderes Ende an einer mit der Grundplatte Gp verbundenen Halterung Hg1 befestigt ist. Eine eventuelle Vorspannung aller ersten, zweiten und dritten Federgelenke Fg1, Fg2 und Fg3 kann durch eine an dem Betätigungshebel Bh angreifende Gegenfeder Gf kompensiert werden, deren anderes Ende an einer mit der Grundplatte Gp verbundenen Halterung Hg2 befestigt ist.

Die vorstehend beschriebene Präzisions-Koaxialspannzange bildet ein Zentriersystem mit Submikrometerpräzision. Bei der praktischen Anwendung konnten beispielsweise im Rahmen der Herstellung von Monomode-Steckverbindungen die nur einige Mikrometer dicken Faserkerne zu den etwa 2 mm starken Steckerstiften auf 0,1 μm genau justiert werden.

## Patentansprüche

1. Koaxialspannzange mit mindestens zwei, vorzugsweise drei, gemeinsam antreibbaren und jeweils über einen zugeordneten Spannhebel (Sh) in radialer Richtung verstellbaren Spannbacken (Sb), wobei jeder Spannhebel (Sh) über ein erstes Federgelenk (Fg1) mit einem zugeordneten, ortsfesten Basisteil (Bt) verbunden ist, **gekennzeichnet** durch folgende Merkmale:

   a. jeder Spannhebel (Sh) ist über ein zweites Federgelenk (Fg2) an einen Stellring (Sr) zum gemeinsamen Spannen und Lösen der Spannbacken (Sb) angelenkt,
   b. der Stellring (Sr) ist jeweils über ein drittes Federgelenk (Fg3) an den Basisteilen (Bt) drehbar gelagert,
   c. sämtliche Spannhebel (Sh), Basisteile (Bt), erste, zweite und dritte Federgelenke (Fg1, Fg2, Fg3) sowie der Stellring (Sr) sind einstückig aus einer gemeinsamen Platte herausgebildet.

2. Koaxialspannzange nach Anspruch 1, dadurch **gekennzeichnet,** daß die Spannbacken (Sb) mit einer gegenüber der gemeinsamen Platte geringeren Stärke einstückig an die zugeordneten Spannhebel (Sh) angeformt sind.

3. Koaxialspannzange nach Anspruch 2, dadurch **gekennzeichnet,** daß die Spannbacken (Sb) mit ihrer verbleibenden Stärke aus einem fest in die gemeinsame Platte eingebrachten Hartmetalleinsatz (He) herausgebildet sind.

4. Koaxialspannzange nach einem der vorhergehenden Ansprüche, dadurch **gekennzeichnet,** daß die Basisteile (Bt) fest mit einer gemeinsamen und in geringem Abstand angeordneten Grundplatte (Gp) verschraubt sind.

5. Koaxialspannzange nach einem der vorhergehenden Ansprüche, dadurch **gekennzeichnet,** daß die Spannhebel (Sh), Basisteile (Bt) ersten, zweiten und dritten Federgelenke (Fg1, Fg2, Fg3) sowie der Stellring (Sr) durch Trennschlitze (Ts) aus der gemeinsamen Platte herausgebildet sind.

6. Koaxialspannzange nach Anspruch 5, dadurch **gekennzeichnet,** daß die ersten Federgelenke (Fg1) jeweils durch zwei in die gemeinsame Platte eingebrachte Bohrungen (Bo1) gebildet sind.

7. Koaxialspannzange nach Anspruch 5 oder 6, dadurch **gekennzeichnet,** daß die zweiten Federgelenke (Fg2) jeweils durch zwei in die gemeinsame Platte eingebrachte Bohrungen (Bo2) gebildet sind.

8. Koaxialspannzange nach einem der Ansprüche 5 bis 7, dadurch **gekennzeichnet,** daß die dritten Federgelenke (Fg3) jeweils durch vier paarweise in die gemeinsame Platte eingebrachte Bohrungen (Bo3) gebildet sind.

9. Koaxialspannzange nach einem der vorhergehenden Ansprüche, dadurch **gekennzeichnet,** daß die zweiten Federgelenke (Fg2) und die dritten Federgelenke (Fg3) durch in die gemeinsame Platte eingebrachte Aussparungen (Au) jeweils in obere und untere Einzelgelenke aufgeteilt sind.

10. Koaxialspannzange nach einem der vorhergehenden Ansprüche, dadurch **gekennzeichnet,** daß die Spannhebel (Sh) derart gekrümmt ausgebildet sind, daß die zugeordneten ersten Federgelenke (Fg1), das Rotationszentrum des Stellringes (Sr) und die zugeordneten zweiten Federgelenke (Fg2) zumindest annähernd in einer geraden Linie liegen.

11. Koaxialspannzange nach einem der vorhergehenden Ansprüche, dadurch **gekennzeichnet,** daß an den Stellring (Sr) ein Betätigungshebel (Bh) angebracht ist, dessen Bewegungsbereich durch seitlich angeordnete Anschläge (As) begrenzt ist.

12. Koaxialspannzange nach Anspruch 11, dadurch **gekennzeichnet,** daß die Spannkraft durch eine an dem Betätigungshebel (Bh) angreifende Feder (Fd) aufgebracht ist.

13. Koaxialspannzange nach Anspruch 12, dadurch **gekennzeichnet,** daß eine eventuelle Vorspannung der Gesamtheit aller ersten, zweiten und dritten Federgelenke (Fg1, Fg2, Fg3) durch eine an dem Betätigungshebel (Bh) angreifende Gegenfeder (Gf) kompensierbar ist.

## Claims

1. Coaxial collet having at least two, preferably three, clamping jaws (Sb) which can be driven together and can be adjusted in the radial direction in each case via an allocated clamping lever (Sh), each clamping lever (Sh) being connected to an allocated, fixed base part (Bt) via a first spring joint (Fg1), characterised by the following features:
   a. each clamping lever (Sh) is linked via a second spring joint (Fg2) to an adjusting ring (Sr) for the common clamping and release of the clamping jaws (Sb),
   b. the adjusting ring (Sr) is rotatably mounted on the base parts (Bt) in each case via a third spring joint (Fg3),
   c. all clamping levers (Sh), base parts (Bt), first, second and third spring joints (Fg1, Fg2, Fg3) as well as the adjusting ring (Sr) are formed in one piece from a common plate.

2. Coaxial collet according to Claim 1, characterised in that the clamping jaws (Sb), with a smaller thickness relative to the common plate, are formed in one piece on the allocated clamping levers (Sh).

3. Coaxial collet according to Claim 2, characterised in that the clamping jaws (Sb), with their remaining thickness, are formed from a carbide insert (He) firmly inserted into the common plate.

4. Coaxial collet according to one of the preceding claims, characterised in that the base parts (Bt) are firmly screwed to a common mounting plate (Gp) arranged at a slight distance.

5. Coaxial collet according to one of the preceding claims, characterised in that the clamping levers (Sh), base parts (Bt), first, second and third spring joints (Fg1, Fg2, Fg3) as well as the adjusting ring (Sr) are formed from the common plate by separating slits (Ts).

6. Coaxial collet according to Claim 5, characterised in that the first spring joints (Fg1) are each formed by two bores (Bo1) made in the common plate.

7. Coaxial collet according to Claim 5 or 6, characterised in that the second spring joints (Fg2) are each formed by two bores (Bo2) made in the common plate.

8. Coaxial collet according to one of Claims 5 to 7, characterised in that the third spring joints (Fg3) are each formed by four bores (Bo3) made in pairs in the common plate.

9. Coaxial collet according to one of the preceding claims, characterised in that the second spring joints (Fg2) and the third spring joints (Fg3) are in each case split into top and bottom individual joints by recesses (Au) made in the common plate.

10. Coaxial collet according to one of the preceding claims, characterised in that the clamping levers (Sh) are designed to be curved in such a way that the allocated first spring joints (Fg1), the centre of rotation of the adjusting ring (Sr) and the allocated second spring joints (Fg2) lie at least approximately in a straight line.

11. Coaxial collet according to one of the preceding claims, characterised in that an actuating lever (Bh) is attached to the adjusting ring (Sr), the range of movement of which actuating lever (Bh) is limited by laterally arranged stops (As).

12. Coaxial collet according to Claim 11, characterised in that the clamping force is applied by a spring (Fd) acting on the actuating lever (Bh).

13. Coaxial collet according to Claim 12, characterised in that any pretension of the entire arrangement of all first, second and third spring joints (Fg1, Fgs, Fg3) can be compensated for by an opposing spring (Gf) acting on the actuating lever (Bh).

**Revendications**

1. Pince de serrage coaxiale comportant au moins deux et de préférence trois mâchoires de serrage (Sb) pouvant être entraînées en commun et réglables chacune dans la direction radiale par l'intermédiaire d'un levier de serrage associé (Sh), chaque levier de serrage (Sh) étant raccordé par l'intermédiaire d'une première articulation élastique (Fg1) à un élément de base fixe (Bt), caractérisée par les caractéristiques suivantes :
   a. chaque levier de serrage (Sh) est articulé, par l'intermédiaire d'une seconde articulation élastique (Fg2) sur une bague de réglage (Sr) servant à serrer et desserrer en commun les mâchoires de serrage (Sb),
   b. la bague de réglage (Sr) est montée, de façon à pouvoir tourner, respectivement par l'intermédiaire d'une troisième articulation élastique (Fg3), sur les éléments de base (Bt),
   c. tous les leviers de serrage (Sh), tous les éléments de base (Bt), les première, seconde et troisième articulations élastiques (Fg1, Fg2, Fg3) ainsi que la bague de réglage (Sr) sont formés d'un seul tenant à partir d'une plaque commune.

2. Pince de serrage coaxial suivant la revendication 1, caractérisée par le fait que les mâchoires de serrage (Sb), qui possèdent une épaisseur réduite par rapport à celle de la plaque commune, sont formées par moulage d'un seul tenant sur les leviers de serrage associés (Sh).

3. Pince de serrage coaxial suivant la revendication 2, caractérisée par le fait que les mâchoires de serrage (Sb), dont l'épaisseur est conservée, sont formées à partir d'un insert en métal dur (He) inséré de façon fixe dans la plaque commune.

4. Pince de serrage coaxial suivant l'une des revendications précédentes, caractérisée par le fait que les éléments de base (Bt) sont fixés par vissage sur une plaque de base commune (Gp), disposée à faible distance.

5. Pince de serrage coaxial suivant l'une des revendications précédentes, caractérisée par le fait que les leviers de serrage (Sh), les éléments de base (Bt), des première, seconde et troisième articulations élastiques (Fg1, Fg2, Fg3) ainsi que la bague de réglage (Sr) sont formés à partir de la plaque commune moyennant l'aménagement de fentes de séparation (Ts).

6. Pince de serrage coaxial suivant la revendication 5, caractérisée par le fait que les premières articulations élastiques (Fg1) sont formées respectivement par deux perçages (Bo1) ménagés dans la plaque commune.

7. Pince de serrage coaxial suivant la revendication 5 ou 6, caractérisée par le fait que les secondes articulations élastiques (Fg2) sont formées respectivement par deux perçages (Bo2) ménagés dans la plaque commune.

8. Pince de serrage coaxial suivant l'une des revendications 5 à 7, caractérisée par le fait que les troisièmes articulations élastiques (Fg3) sont formées respectivement par deux perçages (Bo3) ménagés dans la plaque commune.

9.  Pince de serrage coaxial suivant l'une des revendications précédentes, caractérisée par le fait que les secondes articulations élastiques (Fg2) et les troisièmes articulations élastiques (Fg3) sont subdivisées respectivement en articulations individuelles supérieure et inférieure, par des évidements (Au) ménagés dans la plaque commune.

10.  Pince de serrage coaxial suivant l'une des revendications précédentes, caractérisée par le fait que les leviers de serrage (Sh) sont cintrés de telle sorte que les premières articulations élastiques associées (Fg1), le centre de rotation de la bague de réglage (Sr) et les secondes articulations élastiques associées (Fg2) sont situées au moins approximativement sur une ligne droite.

11.  Pince de serrage coaxial suivant l'une des revendications précédentes, caractérisée par le fait que sur la bague de réglage (Sr) est monté un levier d'actionnement (Bh), dont la zone de déplacement est limitée par des butées latérales (As).

12.  Pince de serrage coaxial suivant la revendication 11, caractérisée par le fait que la force de serrage est appliquée par un ressort (Fd) qui attaque le levier d'actionnement (Bh).

13.  Pince de serrage coaxial suivant la revendication 12, caractérisée par le fait qu'une éventuelle précontrainte de l'ensemble des premières, secondes et troisièmes articulations élastiques (Fg1,Fg2,Fg3) peut être compensée par un ressort antagoniste (Gf) attaquant le levier d'actionnement (Bh).

# FIG 1

# FIG 2

# FIG 3 ✓

FIG 4

Fg 1
Ts
Bo1
Bo 1
Ts

FIG 5

Fg 1

FIG 6

Bo 3
Ts
Fg 2
Ts
Bo 2
Ts
Bo 3
Bo 3
Fg 3

FIG 7

Fg 2
Fg3